# EUROPEAN PATENT SPECIFICATION

(11) **EP 1 981 827 B1**
(45) Date of publication and mention of the grant of the patent: **08.01.2020**
(21) Application number: 06831429.3
(22) Date of filing: 20.12.2006
(51) Int. Cl.: C04B 24/04, C04B 28/02

(54) **CEMENT COMPOSITIONS COMPRISING PARTICULATE CARBOXYLATED ELASTOMERS AND ASSOCIATED METHODS**
ZEMENTZUSAMMENSETZUNG, ENTHALTEND TEILCHENFÖRMIGE CARBOXYLIERTE ELASTOMERE, UND ZUGEHÖRIGE VERFAHREN
COMPOSITIONS DE CIMENT COMPRENANT DES ELASTOMERES CARBOXYLES PARTICULAIRES ET PROCEDES ASSOCIES

(30) Priority: 29.12.2005 US 321113; 29.12.2005 US 321268
(43) Date of publication of application: 22.10.2008
(73) Proprietor: Halliburton Energy Services Inc., Houston, Texas 77032 (US)
(72) Inventor: REDDY, B., Raghava, Duncan, OK 73533 (US); RAVI, Krishna, M., Kingwood, TX 77345 (US)
(74) Representative: Turner, Craig Robert
(86) International application number: PCT/GB2006/004826
(87) International publication number: WO 2007/074330

(56) References cited:
- EP-A- 1 400 497
- WO-A-2005/093202
- DE-A1- 19 732 145
- US-A1- 2004 144 537

## Description

### BACKGROUND

The present invention relates to cementing operations and, more particularly, to cement compositions comprising particulate carboxylated elastomers and associated methods.

Cement compositions are commonly utilized above ground (e.g., in the construction industry) and in subterranean operations, particularly subterranean well completion and remedial operations. For example, cement compositions are used in primary cementing operations whereby pipe strings such as casings and liners are cemented in well bores. In performing primary cementing, cement compositions are pumped into the annular space between the walls of a well bore and the exterior surface of the pipe string disposed therein. The cement composition is permitted to set in the annular space, thereby forming an annular sheath of hardened substantially impermeable cement therein that substantially supports and positions the pipe string in the well bore and bonds the exterior surface of the pipe string to the walls of the well bore. Cement compositions also are used in remedial cementing operations such as plugging highly permeable zones or fractures in well bores, plugging cracks and holes in pipe strings, and the like.

Once set, the cement sheath may be subjected to a variety of cyclic, shear, tensile, impact, flexural, and/or compressive stresses that may lead to failure of the cement sheath, resulting, for example, in fractures, cracks, and/or debonding of the cement sheath from the pipe string and/or the formation. This may lead to undesirable consequences such as lost production, environmental pollution, hazardous rig operations resulting from unexpected fluid flow from the formation caused by the loss of zonal isolation, and/or hazardous production operations. Cement failures may be particularly problematic in high temperature wells, where fluids injected into the wells or produced from the wells by way of the well bore may cause the temperature of any fluids trapped within the annulus to increase. Furthermore, high fluid pressures and/or temperatures inside the pipe string may cause additional problems during testing, perforation, fluid injection, and/or fluid production. If the pressure and/or temperature inside the pipe string increases, the pipe string may expand and stress the surrounding cement sheath. This may cause the cement sheath to crack, or the bond between the outside surface of the pipe string and the cement sheath to fail, thereby breaking the hydraulic seal between the two. As used herein, the term "bond" encompasses adhesion between surfaces, for example between the cement sheath and the pipe string, on a macroscopic scale and/or attractive forces among portions of molecules on a molecular level, for example, among cement particles and elastomers, and may be ionic, covalent, or the weaker Van der Waals, dipole-dipole types, or any combination of such attractive forces. Furthermore, high temperature differentials created during production or injection of high temperature fluids through the well bore may cause fluids trapped in the cement sheath to thermally expand, causing high pressures within the sheath itself. Additionally, sudden changes in well bore temperatures and/or pressures due to change of fluid densities and temperatures possibly encountered during well bore operations (*e.g*., construction, remedial operations, fluid injection) subject the cement sheath to cyclic pressure and temperatures, and, if not designed properly, the cement sheath may fail due to its natural brittle properties. Furthermore, failure of the cement sheath also may be caused by forces exerted by shifts in subterranean formations surrounding the well bore, cement erosion, and repeated impacts from the drill bit and the drill pipe.

To counteract these problems, various additives may be included in the cement composition to enable the cement composition to withstand cyclic changes in imposed stresses. For example, hydrocarbon-based elastomers (for example, styrene-butadiene random and block copolymers, acrylonitrile-butadiene, and acrylonitrile-styrene-butadiene elastomers) have been included in cement compositions to modify the mechanical properties of the cement composition. Generally such materials are used in the particulate form. As used herein, the term "particulate" refers to materials in solid state having a well-defined physical shape as well as those with irregular geometries, including any particulates elastomers having the physical shape of platelets, shavings, fibers, flakes, ribbons, rods, strips, spheroids, hollow beads, toroids, pellets, tablets, or any other physical shape. The particulate elastomers may function to control shrinkage cracking in the early stages of the cement setting process, and also may provide resiliency, ductility, and toughness to the set cement composition so that it resists cracking or fracturing. Further, if fracturing or cracking does occur, the particulate elastomers may function to hold the set cement composition together, thereby resisting fall back of the cement sheath. Particulate elastomers also may dissipate stresses more effectively than the cement matrix, thus potentially shielding the cement composition from failing by catastrophic development of factures and cracks.

The use of particulate elastomers in cement compositions, however, may be problematic. Commonly used particulate elastomers generally contain monomers (such as styrene, butadiene, ethylene, or propylene) that are highly hydrophobic and non-polar. As a result, conventional particulate elastomers are generally non-polar and hydrophobic, while the cement matrix is generally polar and hydrophilic. Due to the hydrophobic nature of conventional particulate elastomers, they generally do not adhere or bond to the cement matrix. Accordingly, the resultant set cement may have a polar and hydrophilic cement matrix with the unbonded and hydrophobic particulate elastomers dispersed therein. The presence of these unbonded particulate elastomers in the cement matrix generally does not allow for the effective transfer of stress from the cement matrix to the particulate elastomers dispersed therein. Additionally, the adhesion of the cement composition to casing and/or formation surfaces may also be compromised due to the poor adhesion of hydrophobic materials to metal and/or formation surfaces resulting in debonding from such surfaces and creating channels for the undesired flow of fluids. Furthermore, addition of such hydrophobic elastomers, which typically have densities either close to or less than that of water, to cement slurries causes them to either float in the slurry or otherwise separate from the cement solids. Addition of the hydrophobic elastomers to the mix water prior to addition of cement may cause the elastomer to float in the mix water so that uniform elastomer distribution into the cement slurry becomes problematic.

Aqueous latex emulsions of elastomeric polymeric materials typically contain small amounts of carboxylic acid containing monomers. For example, styrene butadiene aqueous latex emulsions typically contain small amounts of carboxylic acid containing monomers during polymerization of the styrene and butadiene to provide stability to the aqueous emulsion. However, such latex emulsions may problematic, in that they tend to gel cement compositions and may require large amounts of surfactants to stabilize the cement latex mixtures against premature gelling of cement slurries. Additional problems with the use of latex emulsions in cement compositions include their general lack of stability to the presence of salts and tendency to gel cement compositions at elevated temperatures. Furthermore, aqueous latex emulsions are designed to be film-forming polymer compositions when the water is removed, for example, when the water in cement slurry is consumed in hydration reactions of cement. Such film-forming polymer compositions are not expected to be effective as stress absorbers in cement compositions relative to particulate elastomers which retain their particulate nature even under well bore conditions. Even when a particulate elastomer softens or melts under well bore conditions, it generally remains as a localized softened elastomer or as liquid droplets in the cement matrix instead of forming a film over hydrated cement particles, and thus generally may serve as stress relief sites.

Document EP 1 400 497 A discloses cement compositions for subterranean applications in accordance with the prior art.

### SUMMARY

The present invention relates to cementing operations and, more particularly, to cement compositions comprising particulate carboxylated elastomers and associated methods. As used herein, a "carboxylated elastomer" refers to an elastomer comprising a carboxy group.

One embodiment of the present invention provides a cement composition as set out in claim 1.

Disclosed herein is a cement composition comprising water, a cement, a particulate elastomer comprising a carboxy group, and a hydrophobic particulate elastomer.

Another embodiment of the present invention provides a method of cementing as set out in claim 15.

Another embodiment of the present invention provides use of a particulate elastomer comprising a carboxy group in a cement composition comprising water and a cement for enhancing the mechanical properties of the cement composition as set out in claim 17..

Another embodiment of the present invention provides use of a particulate elastomer comprising a carboxy group in a cement composition comprising water and a cement for enhancing adhesion between the cement composition and a casing and/or a subterranean formation as set out in claim 18..

Disclosed herein is a method of enhancing adhesion between a cement composition and a pipe string and/or a subterranean formation comprising: including a particulate elastomer comprising a carboxy group in the cement composition so that the cement composition comprises water, a cement, and the particulate elastomer; introducing the cementing composition into the subterranean formation; and allowing the cement composition to set therein.

The features and advantages of the present invention will be apparent to those skilled in the art.

### BRIEF DESCRIPTION OF THE DRAWINGS

These drawings illustrate certain aspects of some of the embodiments of the present invention and should not be used to limit or define the invention.
Figure 1 is a schematic illustration of stress arrest due to a particulate carboxylated elastomer in accordance with one embodiment of the present invention.
Figure 2 is a graphic illustration of a segment of a carboxylated elastomer that comprises an elastomer and graft carboxy groups, in accordance with one embodiment of the present invention.
Figure 3 is a graphic illustration of a segment of a carboxylated elastomer having a core-shell morphology, in accordance with one embodiment of the present invention.

### DESCRIPTION OF PREFERRED EMBODIMENTS

The present invention relates to cementing operations and, more particularly, to cement compositions comprising particulate carboxylated elastomers and associated methods. While the compositions and methods of the present invention are useful in a variety of surface and subterranean cementing operations, they are particularly useful in primary cementing, e.g., cementing casings and liners in well bores, including those in multilateral subterranean wells.

The cement compositions of the present invention generally comprise water, a cement, and a particulate carboxylated elastomer. Typically, the cement compositions of the present invention may have a density in the range of from about 4 pounds per gallon ("ppg") to about 20 ppg (from about 0.48 kg/L to about 2.4 kg/L). In certain embodiments, the cement compositions may have a density in the range of from about 8 ppg to about 17 ppg (from about 0.96 kg/L to about 2.04 kg/L). The cement compositions may be foamed or unfoamed or may comprise other means to reduce their densities, such as hollow microspheres, low-density elastic beads, or other density-reducing additives known in the art. Those of ordinary skill in the art, with the benefit of this disclosure, will recognize the appropriate density of the cement composition for a particular application.

The water used in the cement compositions of the present invention may be freshwater, saltwater (e.g., water containing one or more salts dissolved therein), brine (e.g., saturated saltwater produced from subterranean formations), seawater, or combinations thereof. Generally, the water may be from any source, provided that it does not contain an excess of compounds that adversely affect other components in the cement composition. The water may be present in an amount sufficient to form a pumpable slurry. More particularly, the water may be present in the cement compositions of the present invention in an amount in the range of from about 24% to about 200% by weight of cement ("bwoc"). In some embodiments, the water may be present in an amount in the range of from about 35% to about 90% bwoc.

Any cement suitable for use in subterranean cementing operations may be used in accordance with the present invention. Suitable examples include hydraulic cements that comprise calcium, magnesium, aluminum, silicon, oxygen, and/or sulfur, which set and harden by reaction with water. Such hydraulic cements, include, but are not limited to, Portland cements, pozzolana cements, gypsum cements, high alumina content cements, slag cements, silica cements, magnesia cements (commonly referred to as "Sorel cements"), and combinations thereof. In certain embodiments, the cement may comprise a Portland cement. In some embodiments, the Portland cements that are suited for use in the present invention are classified as Class A, C, H, and G cements according to American Petroleum Institute, API Specification for Materials and Testing for Well Cements, API Specification 10, Fifth Ed., July 1, 1990.

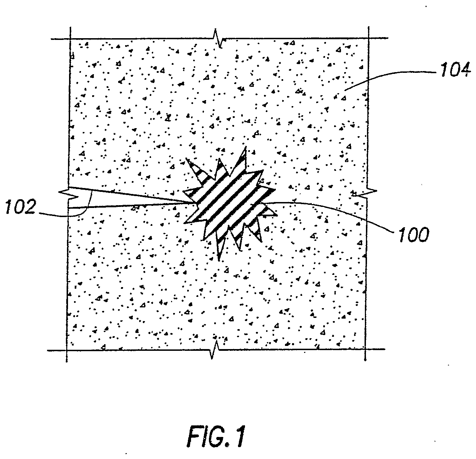

The cement compositions of the present invention further comprise a particulate carboxylated elastomer. In some embodiments the carboxylated elastomer is cross-linked. The particulate elastomer generally should be capable of retaining its particulate nature at well bore conditions, for example, after introduction into the subterranean formation. In some embodiments, these particulate elastomers are thermoplastic, in that the particulate elastomers may melt upon heating and solidify upon cooling. This melting and cooling may be repeated, dependent upon temperature changes. Among other things, the particulate carboxylated elastomer may enable the cement sheath to withstand stresses that may otherwise lead to failure (*e.g*., cracking, fractures, debonding, etc.). Referring now to Figure 1, stress arrest due to particulate carboxylated elastomer 100 is schematically illustrated. For example, carboxylated elastomer 100 may act to prevent further propagation of crack 102 in cement matrix 104.

Furthermore, the inclusion of carboxy groups in the particulate elastomers adds polar functional groups to the elastomer. Due to this added polarity, the particulate carboxylated elastomer generally should be capable of bonding with the cement matrix. Additionally, the carboxy group should generally provide improved adhesion to metal surfaces (*e.g.,* casing), due to ionic bonding between metal ions (*e.g.,* iron (3+) ions) in the oxidized surface of the casing and the carboxy groups. The carboxy group also generally should provide improved adhesion to formation surfaces, due to ionic bonding between calcium ions in the formation surfaces and carboxy groups. Such improved bonding may provide improved shear resistance leading to protection against debonding due to shear stresses between the set cement and casing and/or between the formation and the set cement. These particulate carboxylated elastomers may act to provide resiliency and impact resistance to the set cement composition. The particulate carboxylated elastomers also may improve the mechanical properties of the set cement composition, for example, increasing tensile strengths and compressive strengths and/or decreasing the Young's modulus. The particulate carboxylated elastomers also may facilitate the preparation of uniform mixtures because the particulate carboxylated elastomers may form stable suspensions in water.

Suitable carboxy groups which are substituents on an elastomer include, but are not limited to, any group containing a carbon atom that is linked by a double bond to one oxygen atom, by one single bond to another carbon, and by another single bond to an oxygen, nitrogen, sulfur, or another carboxy carbon. One suitable carboxy group contained in the particulate elastomer may be represented by the general formula COOR, wherein R may be a hydrogen, a metal (for example, an alkali metal, an alkaline earth metal, or a transition metal), an ammonium or a quaternary ammonium group, an acyl group (for example acetyl (CH₃C(O)) group), an alkyl group (such as an ester), an acid anhydride group, and combinations thereof. Examples of suitable carboxy groups include, but are not limited to, carboxylic acid, carboxy esters, carboxy acid anhydrides, and monovalent, divalent, and trivalent metal salts of carboxy acids, derivatives thereof, and combinations thereof. In some embodiments, the particulate elastomers may be modified with carboxylic acid derivatives which can potentially generate carboxy groups, represented by the general formula COOR, upon exposure to aqueous fluids under basic conditions (*e.g*., pH>7) and/or to elevated temperatures. Cement compositions, particularly those containing Portland cement, generally have pH values greater than about 10. Examples of carboxylic acid derivatives that may generate suitable carboxy groups include amides (-C(O)NHR', wherein R' may be a hydrogen, an alkyl group, a hydroxyalkyl group, or 2-methyl-1-propane sulfonic acid or its salts).

The carboxy groups may be present in the particulate elastomer in an amount sufficient to provide the desired polarity. In all embodiments, the carboxy group is present in the particulate elastomer in an amount in the range of from about 0.01% to about 20% by weight of the particulate elastomer. In some embodiments, the carboxy group may be present in the particulate elastomer in an amount in the range of from about 0.5% to about 10% by weight of the particulate elastomer.

Introduction of the carboxy groups into the particulate elastomer may be carried out by a variety of different methods. In some embodiments, the carboxy groups may be introduced during polymerization of the elastomer by copolymerization with a monomer comprising a carboxy group. In some embodiments, the carboxy groups may be introduced by grafting carboxy groups onto a hydrophobic particulate elastomer.

One method of introducing the carboxy groups is by copolymerization with a monomer comprising a carboxy group. For example, an olefin monomer may be copolymerized with a monomer comprising a carboxy group. Examples of suitable olefin monomers, include, but are not limited to, styrene, vinyltoluene, alpha-methylestyrene, butadiene, isoprene, hexadiene, dichlorovinylidene, vinylchloride, ethylene, propylene, butylene, and isobutylene. Examples of suitable monomers comprising a carboxy group include, but are not limited to, acrylic acid, alkyacrylate, alkyl alkacrylates, maleic anhydride, maleimide, acrylamide and 2-acrylamido-2-methyl-1-propane sulfonic acid.

A variety of different particulate carboxylated elastomers may be used that have been prepared by copolymerization. Examples of suitable particulate carboxylated elastomers formed from this copolymerization include, but are not limited to, ethylene acrylic acid comonomers, copolymers that comprise styrene and acrylic acid esters, copolymers that comprise ethylene and acrylic acid esters, and combinations thereof. The term "copolymer," as used herein, is not limited to polymers comprising two types of monomeric units, but includes any combination of monomers, e.g., terpolymers, tetrapolymers, and the like. Additionally, the term "copolymer," or "comonomer," as used herein, is intended to include both the acid form of the copolymer, or comonomer, its derivative forms such as esters, amides, anhydrides, imides, and its various salts. Suitable examples of commercially available ethylene acrylate copolymers are available under the trade names SURLYN®, ACE 1055, and VAMAC® copolymers from Dupont. Another suitable ethylene acrylic acid comonomer is commercially available as a water emulsion under the trade name ADCOTE™ 37-220 adhesive from Rohm and Hass Corporation. An example of a suitable copolymer that comprises ethylene and an acrylic acid ester is an experimental product (V-1921601-60) available as a 60% solid emulsion from 3M Corporation. Another example of a suitable copolymer that comprises ethylene and an acrylic acid ester is an experimental product (V-19219) available as an aqueous emulsion from 3M Corporation.

In accordance with one embodiment of the present invention, a segment of a carboxylated elastomer that was obtained by copolymerization with a monomer comprising a carboxy group is graphically illustrated below by Formula I. The carboxylated elastomer comprises an elastomer backbone and carboxy pendant groups. 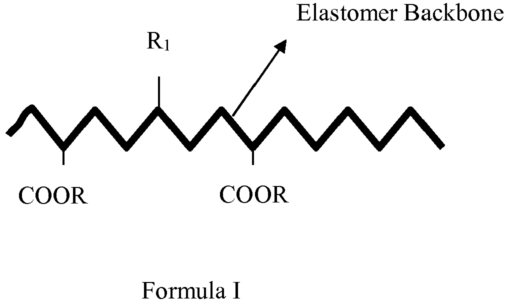 wherein R may be a hydrogen, a metal (for example, an alkali metal, an alkaline earth metal, or a transition metal), an ammonium or a quaternary ammonium group, an acyl group (for example acetyl (CH3C(O)) group), an alkyl group (such as an ester), an acid anhydride group, and combinations thereof; and R₁ may be a hydrogen, an alkyl, or an aryl group.

Another example method for introducing the carboxy groups into the particulate elastomer is by grafting carboxy groups onto a hydrophobic particulate elastomer. For example, such a grafted particulate carboxylated elastomer may comprise an elastomer backbone and graft carboxy groups. Suitable elastomers that may be grafted with carboxylating materials generally comprise olefin monomers, including, but are not limited to, styrene, vinyltoluene, alpha-methylestyrene, butadiene, isoprene, hexadiene, dichlorovinylidene, vinylchloride, acrylonitrile, ethylene, propylene, butylene, isobutylene, and combinations and copolymers thereof. Elastomers containing these olefin monomers may include styrene butadiene random and block copolymers, hydrogenated styrene butadiene random and block copolymers, acrylonitrile butadiene styrene ("ABS") copolymers, ethylene-propylene-diene-monomer (EPDM) copolymers, styrene-acrylic copolymers, acrylonitrile butadiene rubber (NBR) polymers, methylmethacrylate butadiene styrene (MBS) rubbers, and styrene-acrynitrile rubbers. Carboxy groups may be grafted onto a hydrophobic particulate elastomer to form a suitable graft particulate elastomer using a variety of suitable carboxylating materials, including, but not limited to, maleic acid, maleic anhydride, and diesters and monoesters of maleic acid, maleimide, fumaric acid and its derivatives, acrylic acid, alkylacrylate, alkylalkacrylates, acrylamide, 2-acrylamido-2-methyl-1-propanesulfonic acid and its salts.

Examples of suitable graft particulate elastomers include, but are not limited to, maleated polybutadienes, maleated styrene butadiene rubbers ("SBR"), maleated acrylonitrile-styrene-butadiene ("ABS") rubbers, maleated nitrile-butadiene rubbers ("NBR"), maleated hydrogenated acrylonitrile butadiene rubbers ("HNBR"), methylmethacrylate butadiene styrene ("MBS") rubbers, carboxylated ethylene-propylene-diene monomer rubbers, carboxylated styrene-acrynitrile rubbers ("SAN"), carboxylated ethylene propylene diene rubbers ("EPDM"), acrylic grafted silicone rubbers, and combinations thereof. An example of a suitable hydrogenated acrylonitrile butadiene rubber ("HNBR") that is grafted with carboxylating materials is available from Lanxess Corporation, Leverkusen, Germany, under the trade name THERBAN® XT. An example of a suitable nitrile-butadiene rubbers ("NBR") that is grafted with carboxylating materials is available from Zeon Chemicals, L.P., Louisville, Kentucky, under the trade name NIPOL® NBR 1072 CGX. Examples of suitable butadiene based rubbers that are grafted with carboxylating materials are available from Mitsubishi Rayon Company Ltd., Tokyo, Japan, under the trade names METABLEN® C and E. An example of an acrylic rubber that is grafted with carboxylating materials is available from Mitsubishi Rayon Company Limited, Tokyo, Japan, under the trade name METABLEN® W. An example of a suitable silicone based elastomer that is grafted with carboxylating materials is available from Mitsubishi Rayon America Inc., New York, New York, under the trade name METABLEN® S. An example of a suitable styrene butadiene particulate elastomer grafted with maleic acid available as an experimental product (Eliokem XPR-100) from Eliokem Corporation.

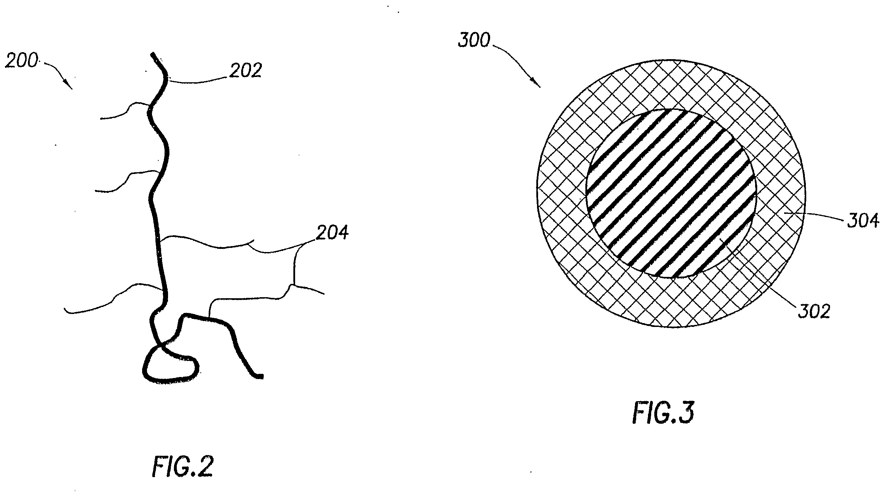

Referring now to Figure 2, grafted carboxylated elastomer 200 is graphically illustrated, in accordance with one embodiment of the present invention. Grafted carboxylated elastomer 200 comprises elastomer backbone 202 and graft carboxy groups 204.

Grafting of elastomers with carboxylating materials may be achieved by any suitable methodology. In some embodiments, suitable graft particulate elastomers may be prepared by polymerizing a monomer (the carboxylating material) in the presence of a preformed polymer backbone (the preformed elastomer). In some embodiments, preparation of suitable graft particulates elastomers comprises a free radical graft polymerization method. Free radical graft polymerization generally requires mixing a radical source (*e.g.,* an organic peroxide), the carboxylating material (e.g., maleic acid or maleic anhydride), and the elastomer. This mixture may then be reacted by heating without a solvent. Suitable free radical graft polymerization methods are described in the Encyclopedia of Polymer Science and Engineering, Second ed., Vol. 7, pp. 551-579, Wiley Interscience Publications, edited by J.J. Kroschwitz. Examples of additional suitable methods of graft polymerizations include radiation grafting and Plasma grafting which may be used for room temperature surface grafting. Grafting by polymerizing a carboxylating material onto a preformed elastomer results in blocks of grafted material covalently attached to the preformed elastomer, may be the preferred method of obtaining the block polymer structure, in cases where the two blocks (the carboxylating material and the elastomer), are chemically incompatible (for example, highly hydrophobic and highly hydrophilic), and cannot be easily copolymerized from a monomer mixture. In some embodiments, surface grafting on the elastomer may result in the graft particulate elastomers having a core-shell morphology, wherein the graft particulate elastomer comprises an elastomer core and a shell that comprises the carboxy groups.

Referring now to Figure 3, a segment of grafted particulate elastomer 300 having a core-shell morphology is graphically illustrated, in accordance with one embodiment of the present invention. Grafted particulate elastomer 300 comprises elastomer core 302 and shell 304 that comprises carboxy groups.

The particulate carboxylated elastomers should be present in the cement compositions of the present invention in an amount sufficient to provide the desired mechanical properties, including resiliency, compressive strength, and tensile strength. The particulate carboxylated elastomers are present in the cement compositions of the present invention in an amount in the range of from about 0.5% to about 25% by weight of total solids. As used herein, "by weight of total solids" refers to the weight included in the cement compositions relative to the total weight of the total solids (such as cement, silica, the particulate elastomers, etc.) included in the cement composition. In some embodiments, the particulate carboxylated elastomers are present in an amount in the range of from about 1% to about 20% by weight of total solids. In some embodiments, the particulate carboxylated elastomers are present in an amount in the range of from about 4% to about 15% by weight of total solids.

The particulate carboxylated elastomers may have a wide variety of shapes and sizes of individual particles suitable for use in the cement compositions of the present invention. The particulate carboxylated elastomers may have well-defined physical shapes as well as irregular geometries, including the physical shape of platelets, shavings, fibers, flakes, ribbons, rods, strips, spheroids, hollow beads, toroids, pellets, tablets, or any other physical shape. In some embodiments, the particulate carboxylated elastomers may have a median size in the range of from about 5 microns to about 1,500 microns (from about 0.005 mm to about 1.5 mm). In some embodiments, the particulate carboxylated elastomers may have a median size in the range of from about 20 microns to about 500 microns (from about 0.02 mm to about 0.5 mm). However, particle sizes outside these defined ranges also may be suitable for particular applications.

Optionally, the cement compositions of the present invention further may comprise a hydrophobic particulate elastomer. While hydrophobic particulate elastomers generally do not bond to the cement matrix, it is believed that the particulate carboxylated elastomers included in the cement compositions of the present invention may act as "coupling agents" or "compatibilizers" between these two incompatible phases, the cement matrix and the hydrophobic particulate elastomer. The phrase "coupling agent," as used herein, refers to a material that aids the bonding between two incompatible materials (for example, an inorganic filler in an organic matrix or vice versa) by forming bonds with both the materials through appropriate portions of the structure. Thus, for example, the carboxy groups in the particulate carboxylated elastomer should bond with the ionic and polar cement particles, and the elastomer portion of the particulate carboxylated elastomer should bond with the hydrophobic elastomer in the cement compositions. Since such materials combine the structural components of two separate polarity mismatched or incompatible materials, and serve to provide a structurally homogeneous composites by mutually bonding with the materials they also may be referred to as "compatibilizers" and generally should improve overall adhesion between two incompatible phases in a composite matrix.

Any hydrophobic particulate elastomers suitable for use in cementing operations may be used. Examples of suitable hydrophobic particulate elastomers include hydrocarbon-based particulate elastomers. Hydrocarbon-based particulate elastomers that may be included in the cement compositions include, but are not limited to, styrene butadiene random and block copolymers, acrylonitrile butadiene styrene ("ABS") copolymers, ethylene-propylene-diene-monomer (EPDM) copolymers, styrene-acrylic copolymers, acrylonitrile butadiene rubber (NBR) polymers, methylmethacrylate butadiene styrene (MBS) rubbers, styrene-acrynitrile rubbers (SAN), and combinations thereof.

Where present, the hydrophobic particulate elastomers may be included in the cement compositions of the present invention in an amount in the range of from about 1% to about 50% by weight of total solids. In some embodiments, the hydrophobic particulate elastomers may be present in an amount in the range of from about 4% to about 25% by weight of total solids. In some embodiments, the hydrophobic particulate elastomers may be included in the cement compositions in a hydrophobic particulate elastomer to particulate carboxylated elastomer weight ratio in the range of from about 20:1 to about 1:10. In some embodiments, the hydrophobic particulate elastomer to particulate carboxylated elastomer weight ratio may be in the range of from about 10:1 to about 1:4. In some embodiments, the hydrophobic particulate elastomer to particulate carboxylated elastomer weight ratio may be in the range of from about 10:1 to about 1:1.

Other additives suitable for use in subterranean well bore cementing operations also may be added to these compositions. Other additives, include, but are not limited to, foaming agents, defoamers, dispersants, retardants, accelerants, fluid loss control additives, weighting agents, vitrified shale, lightweight additives (*e.g*., bentonite, gilsonite, glass spheres, etc.), and fly ash, and combinations thereof. A person of ordinary skill in the art, with the benefit of this disclosure, will know the type and amount of additive useful for a particular application and desired result. carboxylated elastomer; and allowing the cement composition to set. In some embodiments, the methods of the present invention further may comprise introducing the cement composition into a subterranean formation. The step of introducing the cement composition may comprise introducing the cement composition into a well bore, for example, in the annulus between the wall of the well bore and a pipe string disposed in the well bore.

To facilitate a better understanding of the present invention, the following examples of certain aspects of some embodiments are given. In no way should the following examples be read to limit, or define, the scope of the invention.

### EXAMPLE 1

Sample cement slurries using Class H cement were prepared according to API Recommended Practices 10B, Twenty-Second Edition, December 1997. Samples for mechanical property measurements were prepared by curing the slurries in 2"x5" metal cylinders at 190°F (97.8°C) for 72 hours under a pressure of 3,000 psi (20684 kPa). Thereafter, tests for measuring the Young's modulus, compressive strength, and Poisson's ratio were performed on the set samples by load vs. displacement measurements in accordance with ASTM D3148-02 (Standard Test Method for Elastic Moduli of Intact Rock Core Specimens in Uniaxial Compression). The tensile strengths were measured on dog-bone briquettes using a Tinius-Olsen Load Frame Instrument according to CRD-C 260-01 in the U.S. Army Corps of Engineers' Handbook for Concrete and Cement.

Sample No. 1 (comparative) comprised cement, water in an amount of 35.3% by weight of the cement ("bwoc"), and a styrene butadiene copolymer elastomer (FDP 665 from Halliburton Energy Services, Inc.) in an amount of 4% bwoc.

Sample No. 2 comprised cement, water in an amount of 35.3% bwoc, and a styrene butadiene elastomer grafted with maleic acid (Eliokem XPR-100 from Eliokem Corporation) in an amount of 4% bwoc. The densities of both Sample No. 1 and Sample No. 2 were kept substantially identical at 16.4 ppg (2 Kg/L).

The results of these tests are shown in the table below.

**TABLE 1**

| **Component** | **Sample No. 1 (comparative)** | **Sample No. 2** |
|---|---|---|
| Cement (% bwoc) | 100 | 100 |
| Water (% bwoc) | 35.3 | 35.3 |
| Styrene Butadiene Copolymer Elastomer (% bwoc) | 4 | 0 |
| Styrene Butadiene Elastomer Grafted with Maleic Acid (% bwoc) | 0 | 4 |
| Density (ppg) | 16.4 (2 kg/L) | 16.4 (2 kg/L) |
| 72-Hour Tensile Strength (psi) | 510 (3516 kPa) | 650 (4481 kPa) |
| 72-Hour Compressive Strength (psi) | 5,800 (39990 kPa) | 6,540 (45092 kPa) |
| Young's Modulus (psi) | 1.93E+6 | 1.93E+6 |
| Poisson's Ratio | 0.208 | 0.210 |

According, Example 1 illustrates that the tensile and compressive strengths of cement compositions may be enhanced by the addition of an elastomer comprising a carboxy group.

### EXAMPLE 2

Sample cement slurries were prepared at room temperature and cured at 190°F (97.8°C) for 72 hours under a pressure of 3,000 psi (20684 kPa) and tested for mechanical properties as described in Example 1.

Sample No. 3 (comparative) comprised cement, water in an amount of 35% bwoc, and a styrene butadiene copolymer elastomer (FDP 665) in an amount of 4% bwoc.

Sample No. 4 comprised cement, water in an amount of 34.2% bwoc, a styrene butadiene copolymer elastomer (FDP 665) in an amount of 4% bwoc, and an ethylene acrylic copolymer elastomer in an aqueous emulsion (V-19219 from 3M Corporation) in an amount of 1% bwoc.

Sample No. 5 comprised cement, water in an amount of 34.2% bwoc, a styrene butadiene copolymer elastomer (FDP 665) in an amount of 4% bwoc, and a styrene maleic ester copolymer elastomer in an amount of 1% bwoc. The styrene maleic ester copolymer elastomer used in this sample comprised a copolymer of styrene and maleic acid partially esterified with secondary butanol and methanol, obtained from Aldrich Chemical Company. The densities of Sample No. 3, Sample No. 4, and Sample No. 5 were kept substantially identical at 16.4 ppg (2 Kg/L).

The results of these tests are shown in the table below.

**TABLE 2**

| **Component** | **Sample No. 3 (comparative)** | **Sample No. 4** | **Sample No. 5** |
|---|---|---|---|
| Cement (% bwoc) | 100 | 100 | 100 |
| Water (% bwoc) | 35 | 34.2 | 34.2 |
| Styrene Butadiene Copolymer Elastomer (% bwoc) | 4 | 4 | 4 |
| Ethylene Acrylic Copolymer Elastomer (% bwoc) | 0 | 1 | 0 |
| Styrene Maleic Ester Copolymer Elastomer (% bwoc) | 0 | 0 | 1 |
| Density (ppg) | 16.4 (2 Kg/L) | 16.4 (2 Kg/L) | 16.4 (2 Kg/L) |
| 72-Hour Tensile Strength (psi) | 450 (3103 kPa) | 470 (3241 kPa) | 535 (3689 kPa) |
| 72-Hour Compressive Strength (psi) | 6,160 (42472 kPa) | 5,260 (36266 kPa) | 5,940 (40955 kPa) |
| Young's Modulus (psi) | 2.0E+6 | 1.83E+6 | 1.90E+6 |
| Poisson's Ratio | 0.207 | 0.203 | 0.197 |

According, Example 2 illustrates that cement compositions with tensile strength enhancement and/or lowering of Young's Modulus may be achieved by inclusion of a carboxylated elastomer.

### EXAMPLE 3

Sample cement slurries were prepared at room temperature and cured for 72 hours under a pressure of 3,000 psi (20684 kPa) at two different temperatures, and tested for mechanical properties as described in Example 1. The dog bone samples for the tensile strength tests were cured at 190°F (97.8°C), and the cylinders for the uniaxial test were cured at 140°F (60°C).

Sample No. 6 (comparative) comprised cement, water in an amount of 35% bwoc, and a styrene butadiene copolymer elastomer (FDP 665) in an amount of 4% bwoc.

Sample No. 7 comprised cement, water in an amount of 34.2% bwoc, a styrene butadiene copolymer elastomer (FDP 665) in an amount of 4% bwoc, and a styrene butadiene elastomer grafted with maleic acid (Eliokem XPR-100) in an amount of 1% bwoc. The densities of both Sample No. 6 and Sample No. 7 were kept substantially identical at 16.4 ppg (2 Kg/L).

The results of these tests are shown in the table below.

**TABLE 3**

| **Component** | **Sample No. 6 (comparative)** | **Sample No. 7** |
|---|---|---|
| Cement (% bwoc) | 100 | 100 |
| Water (% bwoc) | 35 | 34.2 |
| Styrene Butadiene Copolymer Elastomer (% bwoc) | 4 | 4 |
| Styrene Butadiene Elastomer Grafted with Maleic Acid (% bwoc) | 0 | 1 |
| Density (ppg) | 16.4 (2 Kg/L) | 16.4 (2 Kg/L) |
| 72-Hour Tensile Strength (psi) | 510 (3516 kPa) | 500 (3447 kPa) |
| 72-Hour Compressive Strength (psi) | 3,040 (20684 kPa) | 3,030 (20891 kPa) |
| Young's Modulus (psi) | 1.45E+6 | 1.39E+6 |
| Poisson's Ratio | 0.180 | 0.176 |

According, Example 3 illustrates that modification of the elastomer with a carboxylating material (*e.g.*, maleic acid) lowered the Young's modulus of the cement composition so that it was less brittle.

### EXAMPLE 4

Sample cement slurries were prepared at room temperature and cured at 190°F (97.8°C) for 72 hours under a pressure of 3,000 psi (20684 kPa) and tested for mechanical properties as described in Example 1.

Sample No. 8 comprised cement, water in an amount of 33.2% bwoc, and an ethylene acrylate ester copolymer elastomer in an amount of 3.7% bwoc. The ethylene acrylate copolymer elastomer was obtained as a 60% solid emulsion (V-19219-60) from 3M Corporation.

Sample No. 9 comprised cement, water in an amount of 36.3% bwoc, and an ethylene acrylate ester copolymer elastomer in an amount of 1% bwoc. The ethylene acrylate copolymer elastomer was obtained as a 60% solid emulsion (V-19219-60) from 3M Corporation.

Sample No. 10 comprised cement, water in an amount of 36.3% bwoc, and an ethylene acrylic acid salt comonomer elastomer (ADCOTE™ 37-220 adhesive from Rohm and Haas Corporation) in an amount of 1.86% bwoc.

The results of these tests are shown in the table below.

**TABLE 4**

| **Component** | **Sample No. 8** | **Sample No. 9** | **Sample No. 10** |
|---|---|---|---|
| Cement (% bwoc) | 100 | 100 | 100 |
| Water (% bwoc) | 33.2 | 36.3 | 36.3 |
| Ethylene Acrylate Ester Copolymer Elastomer (% bwoc) | 3.7 | 1.85 | 0 |
| Ethylene Acrylic Acid Salt Comonomer Elastomer (% bwoc) | 0 | 0 | 1.86 |
| Density (ppg) | 16.4 (2 kg/L) | 16.4 (2 kg/L) | 16.4 (2 kg/L) |
| 72-Hour Tensile Strength (psi) | 575 (3965 kPa) | 480 (3309 kPa) | 490 (3378 kPa) |
| 72-Hour Compressive Strength (psi) | 7,470 (51504 kPa) | 6,220 (42885 kPa) | 8,610 (59364 kPa) |
| Young's Modulus (psi) | 2.1E+6 | 2.0E+6 | 2.02E+6 |
| Poisson's Ratio | 0.161 | 0.186 | 0.172 |

Accordingly, Example 4 illustrates that the inclusion of a suitably carboxylated elastomer in a cement composition may provide improvement in mechanical properties.

### EXAMPLE 5

Sample cement slurries were prepared at room temperature and tested for shear bond strength. For measuring shear bond strength of the set sample to metal surfaces, the sample cement slurries were allowed to set in the annuluses of pipe assemblies, i.e., small pipes centered inside larger pipes. The molds were cured at 180° F (82 °C). After setting, the shear bond strength of each portion was determined by supporting the larger pipe and applying force to the smaller inner pipe. The shear bond strength is the total force applied divided by the bonded surface area which breaks.

Sample No. 11 comprised cement, water in an amount of 36.3% bwoc, and an ethylene acrylic acid salt comonomer (ADCOTE™ 37-220 adhesive) in an amount of 0.93% bwoc. The 0carboxy-containing particulate elastomer included in this sample comprised.

Sample No. 12 comprised cement, water in an amount of 37.2% bwoc, and an ethylene acrylic acid salt comonomer (ADCOTE™ 37-220 adhesive) in an amount of 0.45% bwoc.

Sample No. 13 (comparative) comprised cement and water in an amount of 39.0% bwoc. The densities of Sample No. 11, Sample No. 12, and Sample No. 13 were kept substantially identical at 16.4 ppg (2 kg/L).

The results of these tests are shown in the table below.

**TABLE 5**

| **Component** | **Sample No. 11** | **Sample No. 12** | **Sample No. 13 (Comparative)** |
|---|---|---|---|
| Cement (% bwoc) | 100 | 100 | 100 |
| Water (% bwoc) | 36.3 | 37.2 | 39.0 |
| Ethylene Acrylic Acid Salt Ionomer Elastomer (% bwoc) | 0.93 | 0.45 | 0 |
| Density (ppg) | 16.4 (2 kg/L) | 16.4 (2 kg/L) | 16.4 (2 kg/L) |
| Shear Strength (psi) | 380 (2620 kPa) | 330 (2275 kPa) | 265 (1827 kPa) |

According, Example 5 illustrates that the inclusion of a carboxylated elastomer in a cement composition may provide enhanced shear strength.

### EXAMPLE 6

The effects of carboxylation on the resistance of cement compositions to cyclic stresses induced by axial stress cycling were studied by comparing a composition containing the base elastomer used for grafting with carboxy groups with that containing the elastomer which has been grafted with carboxy groups. Accordingly, Sample No. 14 was prepared and cured under conditions identical to those used for preparing and curing of Sample No. 2 with the exception that the styrene butadiene elastomer grafted with maleic acid (Eliokem XPR-100 from Eliokem Corporation) was replaced with the 8% bwoc of an ungrafted styrene butadiene elastomer (Eliokem XPR-99 from Eliokem Corporation), and the slurry density was 16.0 ppg (2 Kg/L).

Sample No. 15 was prepared and cured under conditions identical to those used for preparing and curing of Sample No. 2 with the exception that the amount of the styrene butadiene elastomer grafted with maleic acid (Eliokem XPR-100 from Eliokem Corporation) was increased to 8% bwoc, and the slurry density was 16.0 ppg (2 Kg/L).

The cyclic tests were designed to provide data about the cement response to initial load cycles starting at 50% of compressive strength and increasing 10% of compressive strength per cycle to the final level. The final level was set at the lower value of two standard deviations below the compressive strength, or 90% of compressive strength. The low stress level was set at the larger value of 100 psi (670 kPa), or 10% of compressive strength. The initial partial load cycles were performed under displacement control at a displacement rate of 5 E-5 inches per second, to match the displacement rate of the stress-strain tests. The cyclic portion of the tests were run under force control with the first 10 cycles at 4 minutes per cycle, the next 50 cycles at 2 minutes per cycle, the next 190 cycles at 1 minute per cycle, and the last cycles at 30 seconds per cycle.

Sample No. 15 lasted before failure an average of 240 cycles whereas samples from Composition No. 14 lasted 158 cycles indicating that grafting with carboxy groups improves cyclic resistance of cement compositions.

Therefore, the present invention is well adapted to attain the ends and advantages mentioned as well as those that are inherent therein. The particular embodiments disclosed above are illustrative only, as the present invention may be modified and practiced in different but equivalent manners apparent to those skilled in the art having the benefit of the teachings herein. Furthermore, no limitations are intended to the details of construction or design herein shown, other than as described in the claims below.

In particular, every range of values (of the form, "from about a to about b," or, equivalently, "from approximately a to b," or, equivalently, "from approximately a-b") disclosed herein is to be understood as referring to the power set (the set of all subsets) of the respective range of values, and set forth every range encompassed within the broader range of values. Also, the terms in the claims have their plain, ordinary meaning unless otherwise explicitly and clearly defined by the patentee.

## Claims

1. A cement composition comprising:
water;
a cement; and
a particulate elastomer comprising a carboxy group, wherein the carboxy group comprises a carbon atom linked by a double bond to an oxygen atom, linked by a single bond to another carbon atom, and linked by another single bond to an oxygen, nitrogen, sulfur, or a carboxy carbon, and wherein the particulate carboxylated elastomer is present in an amount in the range of from 0.5% to 25% by weight of total solids present in the cement composition, and wherein the carboxy group is present in the particulate elastomer in an amount in the range of from 0.01% to 20% by weight of the particulate elastomer.

2. A cement composition according to claim 1, wherein the carboxy group has the formula COOR wherein R is a hydrogen, a metal, an ammonium group, a quaternary ammonium group, an acyl group, an alkyl group, an acid anhydride group, or a combination thereof.

3. A cement composition according to claim 1, wherein the particulate elastomer is modified by a carboxylic acid derivative that generates the carboxy group.

4. A cement composition according to claim 3, wherein the carboxy acid derivative is an amide.

5. A cement composition according to claim 1, wherein the carboxy group was introduced into the particulate elastomer by copolymerization of an olefin monomer and a monomer comprising the carboxy group.

6. A cement composition according to claim 1, wherein the particulate elastomer comprises at least one elastomer selected from the group consisting of an ethylene acrylic acid comonomer, a copolymer comprising styrene and an acrylic acid ester, a copolymer comprising ethylene and an acrylic acid ester, and combinations thereof.

7. A cement composition according to claim 1, wherein the particulate elastomer is a graft particulate elastomer comprising a hydrophobic elastomer grafted with a carboxylating material.

8. A cement composition according to claim 1, wherein the particulate elastomer is a graft particulate elastomer comprising an elastomer backbone and graft carboxy groups.

9. A cement composition according to claim 1, wherein the particulate elastomer comprises a graft particulate elastomer selected from the group consisting of a maleated polybutadiene, a maleated styrene butadiene rubber, a maleated acrylonitrile-styrene-butadiene rubber, a maleated nitrile-butadiene rubber, a maleated hydrogenated acrylonitrile butadiene rubber, a methylmethacrylate butadiene styrene rubber, a carboxylated ethylene-propylene-diene monomer rubber, a carboxylated styrene-acrynitrile rubber, a carboxylated ethylene propylene diene rubber, an acrylic grafted silicone rubber, and combinations thereof.

10. A cement composition according to claim 1, wherein the particulate elastomer has a core-shell morphology, the particulate elastomer comprising an elastomer core and a shell that comprises the carboxy group.

11. A cement composition according to claim 1, wherein the particulate elastomer has a median size in the range of from 5 microns to 1,500 microns.

12. A cement composition according to claim 1, wherein the cement composition further comprises a hydrophobic particulate elastomer.

13. A cement composition according to claim 12, wherein the hydrophobic particulate elastomer is selected from the group consisting of a styrene butadiene random copolymer, a styrene butadiene block copolymer, an acrylonitrile butadiene styrene copolymer, an ethylene-propylene-diene-monomer copolymer, a styrene-acrylic copolymer, an acrylonitrile butadiene rubber polymer, a methylmethacrylate butadiene styrene rubber, a styrene-acrynitrile rubber, and combinations thereof.

14. A cement composition according to claim 13, wherein the hydrophobic particulate elastomer is present in a hydrophobic particulate elastomer to particulate elastomer weight ratio in the range of from 20:1 to 1:10.

15. A method of cementing comprising:
providing a cement composition comprising water, a cement, and a particulate elastomer comprising a carboxy group, wherein the carboxy group comprises a carbon atom linked by a double bond to an oxygen atom, linked by a single bond to another carbon atom, and linked by another single bond to an oxygen, nitrogen, sulfur, or a carboxy atom, and wherein the particulate carboxylated elastomer is present in an amount in the range of from 0.5% to 25% by weight of total solids in the cement composition, and wherein the carboxy group is present in the particulate elastomer in an amount in the range of from 0.01% to 20% by weight of the particulate elastomer; and
allowing the cement composition to set.

16. A method according to claim 15, further including the step of introducing the cement composition into a subterranean formation.

17. Use of a particulate elastomer comprising a carboxy group in a cement composition comprising water and a cement for enhancing the mechanical properties of the cement composition, wherein the particulate carboxylated elastomer is present in an amount in the range of from 0.5% to 25% by weight of total solids present in the cement composition, and the carboxy group is present in the particulate elastomer in an amount in the range of from 0.01% to 20% by weight of the particulate elastomer.

18. Use of a particulate elastomer comprising a carboxy group in a cement composition comprising water and a cement, for enhancing adhesion between the cement composition and a casing and/or a subterranean formation, wherein the particulate carboxylated elastomer is present in an amount in the range of from 0.5% to 25% by weight of total solids present in the cement composition, and the carboxy group is present in the particulate elastomer in an amount in the range of from 0.01% to 20% by weight of the particulate elastomer.

19. The use according to claim 17 or 18, wherein the cement composition is introduced into an annulus between a wall of a well bore that penetrates the subterranean formation and a pipe string disposed in the well bore.

## Patentansprüche

1. Zementzusammensetzung, umfassend:
Wasser;
Zement; und
ein teilchenförmiges Elastomer, das eine Carboxy-Gruppe umfasst, wobei die Carboxy-Gruppe ein Kohlenstoffatom umfasst, das durch eine Doppelbindung an ein Sauerstoffatom gebunden ist, durch eine Einzelbindung an ein weiteres Kohlenstoffatom gebunden ist und durch eine weitere Einzelbindung an Sauerstoff, Stickstoff, Schwefel oder einen Carboxy-Kohlenstoff gebunden ist, und wobei das teilchenförmige carboxylierte Elastomer in einer Menge in dem Bereich von 0,5 Gew.% bis 25 Gew.% der insgesamt in der Zementzusammensetzung vorhandenen Feststoffe vorhanden ist, und wobei die Carboxy-Gruppe in dem teilchenförmigen Elastomer in einer Menge in dem Bereich von 0,01 Gew.% bis 20 Gew.% des teilchenförmigen Elastomers vorhanden ist.

2. Zementzusammensetzung nach Anspruch 1, wobei die Carboxy-Gruppe die Formel COOR aufweist, wobei R ein Wasserstoff, ein Metall, ein Ammoniumgruppe, eine quaternäre Ammoniumgruppe, ein Acylgruppe, eine Alkylgruppe, eine Säureanhydridgruppe oder eine Kombination davon ist.

3. Zementzusammensetzung nach Anspruch 1, wobei das teilchenförmige Elastomer durch ein Carboxylsäurederivat modifiziert ist, das die Carboxy-Gruppe generiert.

4. Zementzusammensetzung nach Anspruch 3, wobei das Carboxysäurederivat ein Amid ist.

5. Zementzusammensetzung nach Anspruch 1, wobei die Carboxy-Gruppe in das teilchenförmige Elastomer durch Copolymerisation eines Olefinmonomers und eines Monomers, das die Carboxy-Gruppe umfasst, eingebracht wurde.

6. Zementzusammensetzung nach Anspruch 1, wobei das teilchenförmige Elastomer mindestens ein Elastomer umfasst, ausgewählt aus der Gruppe bestehend aus einem EthylenAcrylsäure-Comonomer, einem Copolymer, das Styrol und einen Acrylsäureester umfasst, einem Copolymer, das Ethylen und einen Acrylsäureester umfasst, und Kombinationen davon.

7. Zementzusammensetzung nach Anspruch 1, wobei das teilchenförmige Elastomer ein aufgepfropftes teilchenförmiges Elastomer ist, das ein mit einem carboxylierenden Material aufgepfropftes hydrophobes Elastomer umfasst.

8. Zementzusammensetzung nach Anspruch 1, wobei das teilchenförmige Elastomer ein aufgepfropftes teilchenförmiges Elastomer ist, das eine Elastomerhauptkette und aufgepfropfte Carboxy-Gruppen umfasst.

9. Zementzusammensetzung nach Anspruch 1, wobei das teilchenförmige Elastomer ein aufgepfropftes teilchenförmiges Elastomer umfasst, ausgewählt aus der Gruppe bestehend aus einem Maleat-Polybutadien, einem Maleat-Styrol-Butadien-Gummi, einem Maleat-Acrylnitril-Styro-Butadien-Gummi, einem Maleat-Nitril-Butadien-Gummi, einem hydrierten Maleat-Acrylnitril-Butadien-Gummi, einem Methylmethacrylat-Butadien-Styrol-Gummi, einem carboxylierten Ethylen-Propylen-Dien-Monomergummi, einem carboxylierten Styrol-Acrylnitril-Gummi, einem carboxylierten Ethylen-Propylen-Dien-Gummi, einem aufgepfropften Acrylsilikongummi und Kombinationen davon.

10. Zementzusammensetzung nach Anspruch 1, wobei das teilchenförmige Elastomer eine Kern-Hülle-Morphologie aufweist, wobei das teilchenförmige Elastomer einen Elastomerkern und eine Hülle, die die Carboxy-Gruppe umfasst, umfasst.

11. Zementzusammensetzung nach Anspruch 1, wobei das teilchenförmige Elastomer eine mittlere Größe in dem Bereich von 5 Mikrometer bis 1500 Mikrometer aufweist.

12. Zementzusammensetzung nach Anspruch 1, wobei die Zementzusammensetzung ferner ein hydrophobes teilchenförmiges Elastomer umfasst.

13. Zementzusammensetzung nach Anspruch 12, wobei das hydrophobe teilchenförmige Elastomer aus der Gruppe ausgewählt ist, bestehend aus einem Styrol-Butadien-Randomcopolymer, einem Styrol-Butadien-Blockcopolymer, einem Acrylnitril-Butadien-Styrol-Copolymer, einem Ethylen-Propylen-Dienmonomer-Copolymer, einem Styrol-Acryl-Copolymer, einem Acrylnitril-Butadien-Gummipolymer, einem Methylmethacrylat-Butadien-Styrol-Gummi, einem Styrol-Acrylnitril-Gummi und Kombinationen davon.

14. Zementzusammensetzung nach Anspruch 13, wobei das hydrophobe teilchenförmige Elastomer in einem Gewichtsverhältnis des hydrophoben teilchenförmigen Elastomers zu dem teilchenförmigen Elastomer in dem Bereich von 20:1 bis 1:10 vorhanden ist.

15. Zementierungsverfahren, umfassend:
Bereitstellen einer Zementzusammensetzung, umfassend Wasser, Zement und ein teilchenförmiges Elastomer, das eine Carboxy-Gruppe umfasst, wobei die Carboxy-Gruppe ein Kohlenstoffatom umfasst, das durch eine Doppelbindung an ein Sauerstoffatom gebunden ist, durch eine Einzelbindung an ein weiteres Kohlenstoffatom gebunden ist und durch eine weitere Einzelbindung an ein Sauerstoff-, Stickstoff-, Schwefel- oder Carboxy-Atom gebunden ist, und
wobei das teilchenförmige carboxylierte Elastomer in einer Menge in dem Bereich von 0,5 Gew.% bis 25 Gew.% der insgesamt in der Zementzusammensetzung vorhandenen Feststoffe vorhanden ist, und wobei die Carboxy-Gruppe in dem teilchenförmigen Elastomer in einer Menge in dem Bereich von 0,01 Gew.% bis 20 Gew.% des teilchenförmigen Elastomers vorhanden ist; und
Zulassen, dass sich die Zementzusammensetzung setzt.

16. Verfahren nach Anspruch 15, ferner beinhaltend den Schritt des Einbringens der Zementzusammensetzung in eine unterirdische Formation.

17. Verwendung eines teilchenförmigen Elastomers, das eine Carboxy-Gruppe umfasst, in einer Zementzusammensetzung, die Wasser und Zement umfasst, zum Verbessern der mechanischen Eigenschaften der Zementzusammensetzung, wobei das teilchenförmige carboxylierte Elastomer in einer Menge in dem Bereich von 0,5 Gew.% bis 25 Gew.% der insgesamt in der Zementzusammensetzung vorhandenen Feststoffe vorhanden ist und die Carboxy-Gruppe in dem teilchenförmigen Elastomer in einer Menge in dem Bereich von 0,01 Gew.% bis 20 Gew.% des teilchenförmigen Elastomers vorhanden ist.

18. Verwendung eines teilchenförmigen Elastomers, das eine Carboxy-Gruppe umfasst, in einer Zementzusammensetzung, die Wasser und Zement umfasst, zum Verbessern der Haftung zwischen der Zementzusammensetzung und einem Futterrohr und/oder einer unterirdischen Formation, wobei das teilchenförmige carboxylierte Elastomer in einer Menge in dem Bereich von 0,5 Gew.% bis 25 Gew.% der insgesamt in der Zementzusammensetzung vorhandenen Feststoffe vorhanden ist und die Carboxy-Gruppe in dem teilchenförmigen Elastomer in einer Menge in dem Bereich von 0,01 Gew.% bis 20 Gew.% des teilchenförmigen Elastomers vorhanden ist.

19. Verwendung nach Anspruch 17 oder 18, wobei die Zementzusammensetzung in einen Ringspalt zwischen einer Wand eines Bohrlochs, das die unterirdische Formation durchdringt, und einem Rohrstrang, der in dem Bohrloch angeordnet ist, eingebracht wird.

## Revendications

1. Composition de ciment comprenant :
de l'eau ;
un ciment ; et
un élastomère particulaire comprenant un groupe carboxy, dans laquelle le groupe carboxy comprend un atome de carbone lié par une double liaison à un atome d'oxygène, lié par une simple liaison à un autre atome de carbone et lié par une autre simple liaison à un atome d'oxygène, d'azote, de soufre ou de carbone carboxyle, et dans laquelle l'élastomère carboxylé particulaire est présent en une quantité dans la plage allant de 0,5 % à 25 % en poids de matières solides totales présentes dans la composition de ciment, et dans laquelle le groupe carboxy est présent dans l'élastomère particulaire en une quantité dans la plage allant de 0,01 % à 20 % en poids de l'élastomère particulaire.

2. Composition de ciment selon la revendication 1, dans laquelle le groupe carboxy est représenté par la formule COOR dans laquelle R est un hydrogène, un métal, un groupe ammonium, un groupe ammonium quaternaire, un groupe acyle, un groupe alkyle, un groupe anhydride d'acide ou une combinaison de ceux-ci.

3. Composition de ciment selon la revendication 1, dans laquelle l'élastomère particulaire est modifié par un dérivé d'acide carboxylique qui génère le groupe carboxy.

4. Composition de ciment selon la revendication 3, dans laquelle le dérivé d'acide carboxylique est un amide.

5. Composition de ciment selon la revendication 1, dans laquelle le groupe carboxy a été introduit dans l'élastomère particulaire par copolymérisation d'un monomère oléfinique et d'un monomère comprenant le groupe carboxy.

6. Composition de ciment selon la revendication 1, dans laquelle l'élastomère particulaire comprend au moins un élastomère choisi dans le groupe constitué par un comonomère d'acide acrylique d'éthylène, un copolymère comprenant du styrène et un ester d'acide acrylique, un copolymère comprenant de l'éthylène et un ester d'acide acrylique et des combinaisons de ceux-ci.

7. Composition de ciment selon la revendication 1, dans laquelle l'élastomère particulaire est un élastomère particulaire greffé comprenant un élastomère hydrophobe greffé avec un matériau carboxylant.

8. Composition de ciment selon la revendication 1, dans laquelle l'élastomère particulaire est un élastomère particulaire greffé comprenant un squelette d'élastomère et des groupes carboxy greffés.

9. Composition de ciment selon la revendication 1, dans laquelle l'élastomère particulaire comprend un élastomère particulaire greffé choisi dans le groupe constitué par un polybutadiène maléaté, un caoutchouc styrène-butadiène maléaté, un caoutchouc acrylonitrile-styrène-butadiène maléaté, un caoutchouc nitrile-butadiène maléaté, un caoutchouc acrylonitrile-butadiène hydrogéné maléaté, un caoutchouc méthylméthacrylate-styrène-butadiène, un caoutchouc monomère éthylène-propylène-diène carboxylé, un caoutchouc styrène-acrynitrile carboxylé, un caoutchouc éthylène-propylène-diène carboxylé, un caoutchouc silicone acrylique greffé et des combinaisons de ceux-ci.

10. Composition de ciment selon la revendication 1, dans laquelle l'élastomère particulaire présente une morphologie noyau-enveloppe, l'élastomère particulaire comprenant un noyau en élastomère et une enveloppe qui comprend le groupe carboxy.

11. Composition de ciment selon la revendication 1, dans laquelle l'élastomère particulaire a une taille médiane dans la plage allant de 5 microns à 1 500 microns.

12. Composition de ciment selon la revendication 1, dans laquelle la composition de ciment comprend en outre un élastomère particulaire hydrophobe.

13. Composition de ciment selon la revendication 12, dans laquelle l'élastomère particulaire hydrophobe est choisi dans le groupe constitué par un copolymère aléatoire styrène-butadiène, un copolymère bloc styrène-butadiène, un copolymère acrylonitrile-styrène-butadiène, un copolymère monomère éthylène-propylène-diène, un copolymère styrène-acrylique, un polymère de caoutchouc acrylonitrile-butadiène, un caoutchouc méthylméthacrylate-styrène-butadiène, un caoutchouc styrène-acrynitrile et des combinaisons de ceux-ci.

14. Composition de ciment selon la revendication 13, dans laquelle l'élastomère particulaire hydrophobe est présent dans un rapport pondéral d'un élastomère particulaire hydrophobe à un élastomère particulaire dans la plage allant de 20:1 à 1:10.

15. Procédé pour cimenter comprenant :
la fourniture d'une composition de ciment comprenant de l'eau, un ciment, et un élastomère particulaire comprenant un groupe carboxy, dans laquelle le groupe carboxy comprend un atome de carbone lié par une double liaison à un atome d'oxygène, lié par une simple liaison à un autre atome de carbone et lié par une autre simple liaison à un atome d'oxygène, d'azote, de soufre ou de carboxy, et
dans laquelle l'élastomère carboxylé particulaire est présent en une quantité dans la plage allant de 0,5 % à 25 % en poids de matières solides totales présentes dans la composition de ciment, et dans laquelle le groupe carboxy est présent dans l'élastomère particulaire en une quantité dans la plage allant de 0,01 % à 20 % en poids de l'élastomère particulaire ; et
le fait de laisser la composition de ciment prendre.

16. Procédé selon la revendication 15, comportant en outre l'étape d'introduction de la composition de ciment dans une formation souterraine.

17. Utilisation d'un élastomère particulaire comprenant un groupe carboxy dans une composition de ciment comprenant de l'eau et un ciment pour améliorer les propriétés mécaniques de la composition de ciment, dans laquelle l'élastomère carboxylé particulaire est présent en une quantité dans la plage allant de 0,5 % à 25 % en poids de matières solides totales présentes dans la composition de ciment, et le groupe carboxy est présent dans l'élastomère particulaire en une quantité dans la plage allant de 0,01 % à 20 % en poids de l'élastomère particulaire.

18. Utilisation d'un élastomère particulaire comprenant un groupe carboxy dans une composition de ciment comprenant de l'eau et un ciment pour améliorer l'adhérence entre la composition de ciment et une enveloppe et/ou une formation souterraine, dans laquelle l'élastomère carboxylé particulaire est présent en une quantité dans la plage allant de 0,5 % à 25 % en poids de matières solides totales présentes dans la composition de ciment, et le groupe carboxy est présent dans l'élastomère particulaire en une quantité dans la plage allant de 0,01 % à 20 % en poids de l'élastomère particulaire.

19. Utilisation selon la revendication 17 ou 18, dans laquelle la composition de ciment est introduite dans un anneau entre une paroi d'un puits de forage qui pénètre dans la formation souterraine et une colonne de tubes disposée dans le puits de forage.
